# EUROPEAN PATENT SPECIFICATION

(11) **EP 3 408 182 B1**
(45) Date of publication and mention of the grant of the patent: **04.03.2020**
(21) Application number: 17701865.2
(22) Date of filing: 27.01.2017
(51) Int. Cl.: B65B 19/02, A24C 5/35, B65B 19/04, B65B 19/10

(54) **FEEDING APPARATUS AND METHOD FOR ROD-SHAPED ARTICLES**
ZUFÜHRVORRICHTUNG UND VERFAHREN FÜR STABFÖRMIGE ARTIKEL
APPAREIL ET PROCÉDÉ D'ALIMENTATION POUR DES ARTICLES EN FORME DE TIGE

(30) Priority: 29.01.2016 EP 16153400
(43) Date of publication of application: 05.12.2018
(73) Proprietor: Philip Morris Products S.A., 2000 Neuchâtel (CH)
(72) Inventor: BAERTSCHI, Stephan, 2000 Neuchâtel (CH); CHUAT, Thierry, 2114 Fleurier (CH); OPPLIGER, Frédéric, 3238 Gals (CH)
(74) Representative: Bohest AG
(86) International application number: PCT/EP2017/051709
(87) International publication number: WO 2017/129715

(56) References cited:
- EP-A1- 0 141 629
- EP-A1- 2 008 935
- WO-A1-2006/002980
- WO-A1-2013/175400
- WO-A1-2014/015940

## Description

The invention relates to an apparatus for the forming of collations of rod-shaped articles, in particular smoking articles. The invention further relates to a method of forming a collation of rod-shaped articles and to a container comprisir rod-shaped articles, which have been formed into a collation by the inventive method.

Devices for forming groups of rod-shaped articles are known. For exampl US-A-5,775,054 discloses an apparatus wherein three layers of cigarettes are fE subsequently from a hopper into pockets on a conveyor belt. EP 2 008 935 A1 discloses a packing machine for cigarettes, wherein only one type of smoking article can be packaged in one container.

It is known in the art that different types of rod-shaped articles can be arranged i a predetermined arrangement of rod-shaped articles, a so-called "collation" of rod-shaped articles. However, the arrangement of rod-shaped articles is restricted to the provision of a whole different layer or column of rod-shaped articles in the respective pockets, and the arrangement is in particular limited in that different smoking articles cannot be provided in the center of the collation ol the smoking articles. EP 0 141 629 A1 discloses a packing machine, which enables to separately wrap two smoking article groups, which can then be packed together in one container.

WO 2014/015940 discloses an apparatus that enables a predetermined collatior of rod-shaped articles comprising at least two different types of rod-shaped articles to be formed. All possible collations of rod-shaped articles may be manufactured using this apparatus.

WO 2013/175400 A1 discloses an apparatus for arranging rod-shaped articles which comprises a hopper configured to receive first articles from a first feeder positioned above the hopper and second articles from a second feeder spaced laterally offset and partially above the hopper. An end portion of the second feeder ends laterally next to a side of an upper portion of the hopper, where the second articles are laterally fed into the hopper by an expulsion device.

It is an object of the invention to provide an apparatus and associated method which allows the more efficient utilisation of space along the path of a production line and the improved utilisation of the space available in a production facility, as well as an arrangement for making a predetermined collation comprising first and second rod-shaped articles which incorporates such an apparatus.

According a first aspect of the present invention an apparatus is provided for arranging rod-shaped articles to be fed into pockets on an endless conveyor operable to travel in a conveyance direction, the apparatus comprising:
a hopper operable to receive rod-shaped articles and to arrange the rod-shaped articles to be fed into the pockets;
a main feeder positioned vertically above the hopper and operable to feed first rod-shaped articles downwards into the hopper;
a lateral feeder spaced at least partially from the hopper in a direction orthogonal to the conveyance direction of the endless conveyor, whereby the lateral feeder is operable to feed second rod-shaped articles along a feeding path through the lateral feeder into the hopper such that the feeding of the second rod-shaped articles is performed under gravity along the full feeding path through the lateral feeder into the hopper, wherein a downstream end portion of the lateral feeder ends vertically above the hopper.

As used herein, the term "downstream end portion of the lateral feeder" refers to a portion at the end of the lateral feeder with regard to the feeding direction through the lateral feeder, at which the rod-shaped articles are released from the feeder.

The conveyance direction of the endless conveyor may be parallel to the path of a production line. The orientation of the longitudinal extension of the rod-shaped articles when being in the hopper is preferably orthogonal to the conveyance direction of the endless conveyor. Accordingly, the lateral feeder may be spaced at least partially from the hopper in a direction parallel to the orientation of the longitudinal extension of the rod-shaped articles when being in the hopper. The longitudinal extension of the rod-shaped article is the main extension direction of the rod-shaped article.

For arranging the rod-shapes articles, the hopper may comprise a plurality of hopper vanes spaced apart from each other in a side-by-side configuration. Accordingly, the lateral feeder may be spaced at least partially from the hopper in a direction transverse, in particular orthogonal to a direction along the side-by-side configuration of the hopper vanes.

By locating the lateral feeder in a position as defined according to the first aspect of the invention, the space in the path of the production line may be utilised more effectively, which may reduce the cost and effort of constructing the production line and allow improved access to machinery located in the path of the production line for maintenance and other purposes. In addition, un- and under-utilised space in other areas of a production facility may more effectively be used. In some circumstances, it may be appropriate to locate the lateral feeder remotely from the hopper in a distant part of the production facility. In other circumstances, it may be appropriate to locate the lateral feeder immediately adjacent to and on one side or the other of the hopper in the conveyance direction of the endless conveyor, if space is available.

Because the lateral feeder according to the first aspect of the invention is operable to feed the second rod-shaped into the hopper under gravity along the full feeding path through the lateral feeder, the apparatus does not require any moving parts, drives etc., thus avoiding the need for extensive and costly maintenance. In addition, gravity-feeding is generally less energy-intensive than alternative methods and therefore environmentally-friendly.

According to one aspect of the apparatus according to the first aspect of the invention, the lateral feeder may be positioned offset above the hopper. In such a case, the lateral feeder is disposed to feed rod-shaped articles at an angle to the horizontal, since it is offset from the hopper by virtue of being displaced laterally from it. Advantageously, the angle to the horizontal is less than or equal to 30 degrees, preferably less than or equal to 15 degrees, more preferably less than or equal to 10 degrees.

Additionally, the apparatus according to the first aspect of the invention may comprise feeding assistance means operable to assist the feeding of the second rod-shaped articles along the feeding path through the lateral feeder. In particular, the apparatus according to the first aspect of the invention may comprise transport means as feeding assistance means operable to transport the second rod-shaped articles in a feeding direction along the feeding path through the lateral feeder. Said feeding assistance means, in particular said transport means, may comprise pneumatic conveyancing means, mechanical conveyancing means, or a combination thereof.

According to one embodiment of the apparatus according to the first aspect of the invention, the transport means may be turned on and off intermittently, to supply second rod-shaped articles intermittently.

The pneumatic conveyancing means may comprise a source of gas, preferably air, operable to move in the feeding direction to pneumatically convey the second rod-shaped articles through the lateral feeder and into the hopper. The pneumatic conveyancing means may also comprise a source of gas, preferably air, operable to move in a direction counter to the feeding direction. Accordingly, the pneumatic conveyancing means may comprise at least one source of gas, preferably air, wherein at least a component of the source of gas is operable to move in at least one of:
(a) the feeding direction to assist feeding under gravity by additionally pneumatically conveying the second rod-shaped articles through the lateral feeder and into the hopper;
(b) a direction counter to the feeding direction to provide an air cushion to reduce friction between the second rod-shaped articles and the lateral feeder as the second rod-shaped articles move in the feeding direction under gravity.

The mechanical conveyancing means may comprise vibrating means, preferably ultrasonic vibrating means. Such vibrating means may also facilitate the smooth transport of rod-shaped articles and prevent blockages of rod-shaped articles as a result of static friction. Optionally, one or more sources of gas, preferably air, may additionally be present. According to one embodiment, at least a component of the source of gas or each source of gas is operable to move in at least one of:
(a) the feeding direction to assist the mechanical conveyancing means by additionally pneumatically conveying the second rod-shaped articles through the lateral feeder and into the hopper;
(b) a direction counter to the feeding direction to provide an air cushion to reduce friction between the second rod-shaped articles and the lateral feeder as the second rod-shaped articles move in the feeding direction.

In some embodiments of the apparatus according to the first aspect of the invention, it is possible to employ two or more sources of gas moving in different, even opposed directions, if each flow of gas is present in different, localised parts of the lateral feeder. For example, one source of gas may be provided in the center of the lateral feeder to move in the feeding direction, while other sources of gas may be provided at the sides to move in a direction counter to the feeding direction. Alternatively, the converse configuration may be advantageous, and sources of gas at the sides may move in the feeding direction, while a source of gas in the center may move counter to the feeding direction. In a further embodiment, any source of gas may move in a direction which is neither fully in the feeding direction or counter to the feeding direction, such that only a component of the gas flow is in the feeding direction or counter to it.

According to another embodiment, one or more sources of gas may move perpendicular to the feeding direction. For example, to reduce the possibility that rod-shaped articles jam together at a certain location, a source of gas could be injected from the side at an angle which is perpendicular to the feeding direction.

The lateral feeder according to the first aspect of the invention is configured appropriately in order to feed the second rod-shaped articles into the hopper. In one embodiment, the lateral feeder may be configured to have at least one curved portion operable to feed the rod-shaped articles into the hopper in a desired orientation. The lateral feeder may also be curved along the full feeding path. In particular, the lateral feeder may exclusively consist of one or more curved portions. The inside radius of the curved portion or each curved portion may have a magnitude which is sufficient not to impede gravity feeding of the second rod-shaped articles. The magnitude of the inside radius will depend upon factors which include the size and shape of the rod-shaped articles in question and whether the rod-shaped articles are gravity fed only, or fed via a combination of gravity and transport means.

The curvature of the at least one curved portion or each curved portion of the lateral feeder may be such the at least one curved portion or each curved portion is curved in the direction of the longitudinal extension of the rod-shaped articles which are to be fed through the lateral feeder, in particular which are to be fed through the lateral feeder in a side-by-side configuration such that the leading side in the feeding direction of the rod-shaped articles is formed by the longitudinal extension of the rod-shaped articles. By this, the at least one curved portion of the lateral feeder is configured to deflect the rod-shaped articles in the direction of their longitudinal extension. The longitudinal extension of the rod-shaped article is the main extension direction of the rod-shaped article.

The lateral feeder, in particular the at least one curved portion or each curved portion of the lateral feeder, may be configured to feed the rod-shaped articles one after the other in a single-file configuration. Advantageously, feeding the rod-shaped articles one by one reduces the likelihood of blocking or rod-shaped articles jamming together.

In the case in which the rod-shaped articles are smoking articles, the combustible portion may have a different diameter than any filter present and in such a case, if the wider portion is oriented to be located proximal to the inside of the curve or each curve as it moves through the lateral feeder, then that would increase the likelihood of rod-shaped articles jamming together. In such a case, the skilled person might decide to orient the rod-shaped articles so that the wider portion is located distally to the inside of the curve or each curve. In the case in which wider portions of the rod-shaped articles are found on the inside radius of at least one of the curves, then it may be necessary to modify the radius of the curved portion or each curved portion to allow for that.

The lateral feeder may comprise a feeding channel through which the rod-shaped articles may be conveyed to the hopper. The feeding channel may be configured to allow the rod-shaped articles to be conveyed:
(a) Side-by-side, such that the leading side in the direction of conveyance of the rod-shaped articles through the feeding channel is formed by the longitudinal extension of the rod-shaped articles. The longitudinal extension of the rod-shaped article is the main extension direction of the rod-shaped article; or
(b) End-to-end, such that each end of a rod-shaped article abuts an end of adjacent rod-shaped article as the rod-shaped articles are conveyed in the direction of conveyance through the feeding channel.

Advantageously, the feeding channel is configured to allow the rod-shaped articles to be fed side-by-side. In the case in which the rod-shaped articles are fed side-by-side, the feeding channel preferably has a width dimension which is greater than the longitudinal extension of the rod-shaped articles that the channel is intended to convey and a height dimension which is greater than the diameter of the rod-shaped articles that it is intended to convey, in both cases the respective dimension being exceeded by an amount sufficient to allow single rod-shaped articles to be conveyed side-by-side in series, but not by an amount sufficient to allow rod-shaped articles to be conveyed side-by-side in parallel.

In the apparatus according to the first aspect of the invention, the main feeder may be operable to feed the first rod-shaped articles into the hopper under gravity. Additionally, or alternatively, other transport means as described in relation to the lateral feeder may be provided.

According to a second aspect of the invention an arrangement is provided for forming a predetermined collation of rod-shaped articles, in particular smoking articles, comprising an apparatus of the first aspect of the invention, rod-shaped articles and pockets. According to this aspect, each pocket is adapted to house a predetermined number of rod-shaped articles in a predetermined collation, and in the predetermined collation each rod-shaped article has a predetermined position within the pocket.
Furthermore, the hopper comprises a plurality of hopper vanes, and each hopper vane of the plurality of hopper vanes is at least associated with one predetermined position in the pocket. The main feeder is adapted to provide first rod-shaped articles to a first subset of hopper vanes of the plurality of hopper vanes. The lateral feeder is adapted to provide second rod-shaped articles to a second subset of hopper vanes of the plurality of hopper vanes. The apparatus comprises an additional feeder, and the additional feeder is adapted to provide third rod-shaped articles to a third subset of hopper vanes of the plurality of hopper vanes.

As used herein, the term "vane" refers to a chute, into which rod-shaped articles may be fed at one end and from which rod-shaped articles may be removed at the other, and which is sufficiently enclosed on all sides to retain rod-shaped articles therein such that they may only be fed and removed at the ends.

According to one aspect of the arrangement of the second aspect of the invention, each of the first, second and third rod-shaped articles may be the same as one another or they may be different from one another. Advantageously, at least one of the first, second and third rod-shaped articles is different from the other two types of rod-shaped article. Alternatively, each type of rod-shaped article may be different from each other type of rod-shaped article, such that the first rod-shaped articles are different from the second and third rod-shaped articles and the second rod-shaped articles are different form the third rod-shaped articles.

According to a further aspect of the arrangement of the second aspect of the invention, the additional feeder may also be spaced at least partially from the hopper in a direction orthogonal to the conveyance direction of the endless conveyor. Furthermore, the additional feeder may be operable to feed the third rod-shaped articles into the hopper under gravity. In particular, the additional feeder may be operable to feed the third rod-shaped articles along a feeding path through the additional feeder into the hopper such that the feeding of the third rod-shaped articles is performed under gravity along the full feeding path through the additional feeder into the hopper, wherein a downstream end portion of the additional feeder ends vertically above the hopper. Additionally, or alternatively, transport means as described in relation to the lateral feeder may be provided for the additional feeder. The lateral feeder may be configured to have at least one curved portion operable to feed the third rod-shaped articles into the hopper in a desired orientation as described in relation to the lateral feeder.

According to a further aspect of the arrangement of the second aspect of the invention, each layer of rod-shaped articles in a predetermined collation of rod-shaped articles is advantageously provided at a separate transfer location of hopper vanes specific to that layer, referred to herein as a "transfer location". The transfer locations are provided at sequential positions adjacent to the endless conveyor in the conveyance direction, such that a first layer is provided at a first transfer location, a second layer is provided over the first layer at a second transfer location, a third layer is provided over the second layer at a third transfer location, and so on if additional layers are provided at additional transfer locations.

Preferably, according to a further aspect of the arrangement of the second aspect of the invention, the first, second and third subsets of hopper vanes of the plurality of hopper vanes and the separate transfer locations of the hopper vanes are different, such that different types of rod-shaped articles may be comprised in a layer of the different layers of rod-shaped articles fed into a pocket (if the rod-shaped articles fed into the different subsets of hopper vanes that supply a transfer location are also different from one another). In other words, transfer locations may comprise hopper vanes of more than one subset of hopper vanes. Thus, if each subset of hopper vanes provides different rod-shaped articles, different types of rod-shaped articles may be provided by one transfer location of hopper vanes, and accordingly a layer fed into the pocket will comprise more than one type of rod-shaped article. Thus, according to a preferred embodiment of the second aspect of the invention, a collation of up to three different types of rod-shaped articles can be arranged in a pocket, each type of rod-shaped article being provided at a predetermined location within the collation.

Advantageously, according to a further aspect of the arrangement of the second aspect of the invention, each hopper vane may be associated with one collation column or one collation layer. The hopper vane may provide several rod-shaped articles, which form a collation column or a collation layer. Alternatively, the hopper vane may provide only one rod-shaped article, which is part of a collation column or collation layer, while other hopper vanes provide the remaining rod-shaped articles of the collation column or collation layer.

Preferably, the number of hopper vanes of the plurality of hopper vanes in the hopper may correspond to the number of rod-shaped articles in the predetermined collation such that each hopper vane is associated with a predetermined position for a rod-shaped article in the predetermined collation. This allows the greatest number of variations of collations of rod-shaped articles which may be formed, because any collation may be formed, as the type of each rod-shaped article in the pocket can be determined individually.

Advantageously, according to a further aspect of the arrangement of the second aspect of the invention, the pocket and the hopper vanes are adapted to be moved relative to one another after feeding a layer of rod-shaped articles into the pocket. This allows the feeding of several layers of rod-shaped articles into the pocket, from transfer locations being arranged at different, sequential positions in the conveyance direction. The transfer locations may be provided at differing heights for transferring the respective rod-shaped articles to the pocket. More particularly, a first transfer location of hopper vanes may be provided at a lower height than a second transfer location of hopper vanes in the conveyance direction, and the second transfer location of hopper vanes may be provided at a lower height than a third transfer location of hopper vanes in the conveyance direction and so forth.

The pocket may be movable between the separate transfer locations on the endless conveyor. Additionally, the hopper vanes may themselves be movable with respect to the pocket in the conveyance direction or in the opposite direction. Furthermore, the hopper vanes may be movable vertically with respect to the pocket.

A plurality of pockets may be provided on the endless conveyor. The endless conveyor is operable to move in the conveyance direction and bring each pocket into alignment with and stop beside a transfer location adjacent to the endless conveyor, in order to be fed a layer of rod-shaped articles. Each pocket is then moved to the sequentially next transfer location where it stops, to receive a further layer of rod-shaped articles, and so on. Each pocket may stop consecutively at each of the transfer locations, for receiving a layer of rod-shaped articles from each of the transfer locations, although it may receive a column instead. The conveyor may be a belt, chain or any other suitable conveyor. The respective layers after the first layer may be provided consecutively one on top of the other.

According to a further aspect of the arrangement of the second aspect of the invention, one or more further feeders may be provided, each of which being configured to feed rod-shaped articles which are the same or different to rod-shaped articles fed by one or more of the main feeder, the lateral feeder and the additional feeder. Further subset(s) of hopper vanes may be provided for each additional feeder.

With regard to the hopper vanes, these may extend substantially in the vertical direction and be arranged in groups, each group corresponding to a transfer location, whereby a group may or may not be the same as a "subset of hopper vanes" and is preferably not the same. Typically, each hopper vane in a group of hopper vanes has an inlet at the end closer to the feeder(s) and an outlet at the end closer to the endless conveyor, the outlets advantageously being arranged adjacent to each other at the same height. The hopper vanes may be slightly inclined with respect to one another, such that the distance between the hopper vanes of each transfer location of hopper vanes is reduced towards their downstream end, such that rod-shaped articles which are transferred together from a transfer location to form a layer in the pocket may be packed relatively close to one another. However, at the upstream end of the hopper vanes, all hopper vanes of each subset, or of all transfer locations are preferably substantially equidistant. This facilitates the feeding of the rod-shaped articles from the feeder arrangement to the hopper vanes. As used herein, the term "downstream" refers to a position displaced from a given position in the conveyance direction and the term "upstream" refers to a position displaced from a given position in the opposite direction to the conveyance direction.

Preferably, the lower ends of the hopper vanes at a transfer location are at the same level as the layer of rod-shaped articles provided by this transfer location of hopper vanes into the pocket. A pushing means is adapted to push the rod-shaped articles into the pockets. The pushing movement is preferably substantially in the direction of the longitudinal extension of the rod-shaped articles.

Preferably each chute has a width slightly larger than the diameter of the rod-shaped articles. Thus, only one rod-shaped article may be arranged at the same height in each chute, while several rod-shaped articles may be provided parallel and adjacent to each other in the extension direction of the hopper vane. Preferably, the depth of the hopper vane is slightly larger than the length of the rod-shaped articles in the longitudinal direction. Thus, the rod-shaped articles are provided in defined positions in the hopper vanes.

The maximum number of hopper vanes preferably corresponds to the maximum number of rod-shaped articles provided in one pocket, as each hopper vane is preferably assigned to a specific position in the pocket.

The rod-shaped articles may be transferred in one or several steps to the pocket.

According to a further aspect of the arrangement of the second aspect of the invention, the pocket may be rectangular, trapezoid or triangular in cross-section, but is preferably rectangular. The pocket may, for example, be cuboid, or trapezoid in shape, and is preferably a rectangular cuboid.

It will be appreciated that, through an appropriate choice of its dimensions, the pocket may house different total numbers of rod-shaped articles or different arrangements of rod-shaped articles, referenced herein with the term "collation". For example, the pocket may house a total of between ten and thirty rod-shaped articles. The rod-shaped articles may be arranged in different collations, depending on the total number of rod-shaped articles. For example, the rod-shaped articles may be arranged in a single layer of six, seven, eight, nine or ten. Alternatively, the rod-shaped articles may be arranged in two or more layers. The two or more layers may contain the same number of rod-shaped articles or may contain different numbers of rod-shaped articles to each other.

By means of the arrangement according to the invention different types of rod-shaped articles can be provided in different, predetermined layers and columns within the pocket to form a predetermined collation. The different types of rod-shaped articles may relate to rod-shaped smoking articles of different length, diameter, filter construction, brands, colors and combinations thereof.

The predetermined collation may comprise up to three different parts, being the first, second and third rod-shaped articles, when all three are different from one another. It may even contain more than three if additional feeders feeding further types of rod-shaped articles are present. Typically, the pocket has a substantially rectangular cross-section defining an opening through which rod-shaped articles may be fed when a pocket is filled and subsequently removed by a consumer of the rod-shaped articles. When viewed after filling, the collation may comprise layers of rod-shaped articles extending along the longer side of the rectangle and columns of rod-shaped articles extending substantially along the shorter side of the rectangle. Typically, each layer comprises five to seven rod-shaped articles and each column comprises three rod-shaped articles. Thus, the pockets typically contain fifteen to twenty-one rod-shaped articles.

Rod-shaped articles may be omitted from the columns and/or layers in a pocket. Protrusions or place holders may be provided for this purpose. In addition, or alternatively, spacers may be provided, which may take the place of one or more rod-shaped articles. A spacer may have the size and shape of one rod-shaped article or of a plurality of rod-shaped articles or it may be cup-shaped. In cross-section, it may be circular, semi-circular, oval, hexagonal, triangular, or have any other suitable shape. In one embodiment, a spacer may have the size and shape of an odd number of rod-shaped articles, such as three or five rod-shaped articles, which may be arranged as a pyramid. The spacer may comprise a folded blank, a resilient material, such as a foam, may be at least partially hollow or may comprise a mixture thereof.

The columns of rod-shaped articles may not always be straight, but the rod-shaped articles in each of the layers may be offset from one another to allow for tighter packing of the rod-shaped articles. Preferably, the rod-shaped articles in one layer are offset by the radius of a rod-shaped article from the rod-shaped articles in each adjacent layer.

The rod-shaped articles may be longitudinally extending smoking articles. The longitudinal extension of the smoking article is the main extension direction of the smoking article. In particular, the smoking article is cylindrical and the longitudinal axis is its central axis. Where the rod-shaped articles have a substantially cylindrical form, the nappe is preferably parallel to the longitudinal extension direction. In particular, the rod-shaped articles are cigarettes, filter cigarettes, cigars, or components for smoking devices. Components for smoking devices may be longitudinally extending smoking material rods, which are inserted into a heating device, such as an electrical or carbonaceous heating device, and which are heated but not burned during consumption. The rod-shaped articles may also be other rod-shaped articles of similar size and dimensions including, for example, smoking accessories, such as flavor-reservoirs or elongate ash-trays that are arranged in substitution for one or several smoking articles in the collation. In particular, a smoking accessory may be arranged such that it occupies the space which would be usually allocated to one or several smoking articles in the collation. Furthermore, rod-shaped spacer elements may be included in a collation. Such spacer elements may be cylindrical, but need not be and may instead have a square, a triangular or other suitable cross-section. In addition, such spacer elements may occupy the volume of a single rod-shaped article or the volume of a plurality of rod-shaped articles. For example, a triangular spacer may occupy the volume of three or five of the rod-shaped articles which are otherwise comprised within a pocket.

According to a third aspect of the invention, a method for arranging rod-shaped articles to be fed into pockets on an endless conveyor travelling in a conveyance direction is provided, the method comprising:
- providing a hopper;
- providing a main feeder positioned vertically above the hopper comprising first rod-shaped articles and feeding the first rod-shaped articles downwards into the hopper;
- providing a lateral feeder spaced from the hopper in a direction orthogonal to the conveyance direction of the endless conveyor, the lateral feeder comprising second rod-shaped articles and feeding the second rod-shaped articles along a feeding path through the lateral feeder into the hopper such that the feeding of the second rod-shaped articles is performed under gravity along the full feeding path through the lateral feeder into the hopper, wherein a downstream end portion of the lateral feeder ends vertically above the hopper;
- whereby the hopper receives the first and second rod-shaped articles and arranges them to be fed into the pockets.

According to a fourth aspect of the invention a container comprising rod-shaped articles is provided, which rod-shaped articles have been formed into a predetermined collation by the method of the third aspect of the invention or using an arrangement of the second aspect of the invention, whereby the container comprises at least two different types of rod-shaped articles, wherein the container comprises columns and rows with different types of rod-shaped articles.

Embodiments of the invention will now be described, by way of example only, with reference to the accompanying drawings, in which:
- Figure 1: illustrates a frontal cross-section of a prior art apparatus;
- Figure 2: illustrates a side view of the prior art apparatus of Figure 1;
- Figure 3: illustrates a perspective view of one embodiment of an apparatus according to the first aspect of the invention and an arrangement according to the second aspect of the invention;
- Figure 4: illustrates a plan view (from above) of the apparatus and arrangement according to Figure 3;
- Figure 5: illustrates a perspective view of another embodiment of an apparatus according to the first aspect of the invention and an arrangement according to the second aspect of the invention;
- Figure 6: is a side view of the embodiment of Fig.5;and
- Figure 7: is a plan view (from above) of the embodiment of Fig.5.

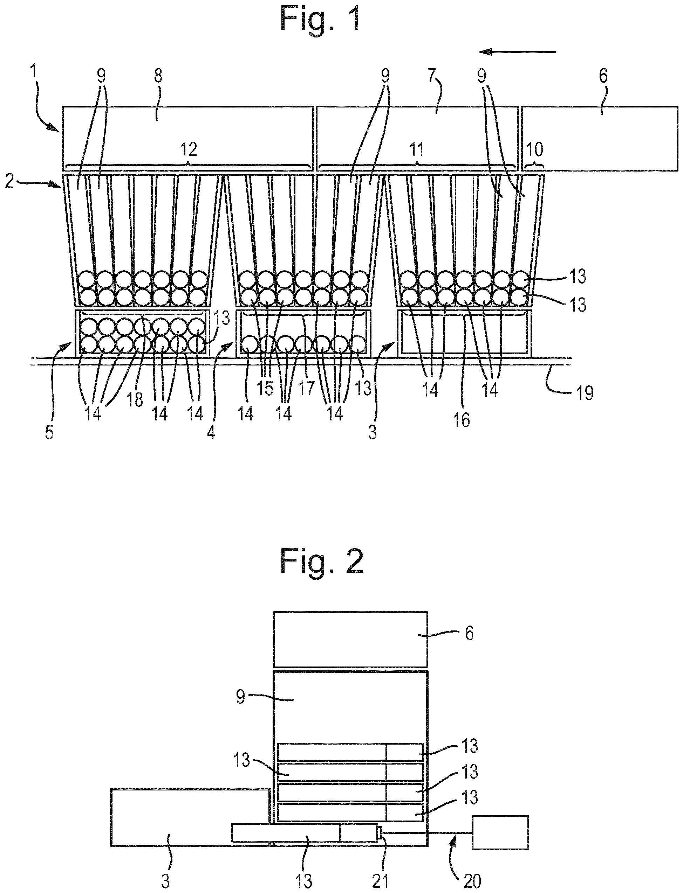

With reference to Fig.1, the feeder arrangement 1 comprises a first feeder 6, a second feeder 7, and a third feeder 8. Each of the feeders 6, 7, 8 provides rod-shaped articles to the hopper 2. The three feeders, 6, 7, 8, are arranged in a linear fashion in the conveyance direction along the production line, parallel to the endless conveyor.

The hopper 2 comprises a plurality of hopper vanes 9, wherein a first subset 10 of hopper vanes 9 is assigned to the first feeder 6, a second subset 11 of hopper vanes 9 is assigned to the second feeder 7, and a third subset 12 of hopper vanes 9 is assigned to the third feeder 8. In particular, the first feeder 6 is arranged above the first subset 10 of hopper vanes 9, the second feeder 7 is arranged above the second subset 11 of hopper vanes 9, and the third feeder 8 is arranged above the third subset 12 of hopper vanes 9. Each of the feeders 6, 7, 8, respectively provides different types of rod-shaped articles 13, 14, 15 to the different hopper vanes 9.

The hopper vanes 9 are arranged substantially in an equal distance at their upper edge, which is adjacent to the feeders 6, 7, 8 of the feeder arrangement 1. In the downstream direction, the feeder vanes 9 are inclined towards each other to provide separate transfer locations at their downstream ends. In particular, the hopper vanes 9 are grouped into a first transfer location 16, a second transfer location 17, and a third transfer location 18. Each of the transfer locations 16, 17, 18 of hopper vanes 9 provide one layer of rod-shaped articles 13, 14, 15 into the pockets 3, 4, 5. The pockets 3, 4, 5 are arranged on an endless conveyor, which is a conveyor belt 19. After the pocket 3 has received the first layer of rod-shaped articles, comprising a first type of rod-shaped articles 13 and a second type of rod-shaped articles 14, the pocket 3 moves on the conveyor belt 19 to the further downstream position as shown for pocket 4, such that it can receive rod-shaped articles 14, 15 from the second transfer location 17 of hopper vanes 9. The second transfer location 17 of hopper vanes 9 provides rod-shaped articles of the second type 14 and of a third type 15. After having received the second layer of rod-shaped articles 14, 15 from the second transfer location 17 of hopper vanes 9, the pocket 4 moves into the further downstream position as shown for pocket 5 in figure 1 by means of the conveyor belt 19. Then, the third transfer location 18 provides a third layer of rod-shaped articles to the pocket, wherein the hopper vanes 9 of the third transfer location 18 only comprise rod-shaped articles of the third type 15.

Thus, finally, three layers of rod-shaped articles 13, 14, 15 are provided in the pocket 3, 4, 5, wherein the first layer comprises one smoking article of the first type 13 in the rightmost position, and the remaining rod-shaped articles of the first layer are rod-shaped articles of the second type 14. The middle layer of the rod-shaped articles in the pocket is comprised of rod-shaped articles of the second type 14 and the third type 15, and the third layer of the rod-shaped articles in the pocket is comprised of rod-shaped articles of the third type 15 only. Thus, depending on the arrangement of the feeders 6, 7, 8 above the hopper vanes 9 defining the subsets 10, 11, 12, any combination of rod-shaped articles can be provided in the pockets. The smoking article of the first type 13 forms a first part of the collation, the smoking articles of the second type 14 form a second part of the collation, and the smoking articles of the third type 15 form a third part of the collation.

In Figure 2, a cross section of the rightmost feeder 6, hopper vane 9, and pocket 3 as seen in the side view is shown. The rod-shaped articles of the first type 13 fall from the first feeder 6 into the rightmost hopper vane 9, wherein they are arranged on top of each other in a single column of rod-shaped articles 13. The lowermost smoking article 13 is engaged by a pushing means 20, in particular in the form of a linear drive, which comprises a protruding pushing element 21 that can be moved linearly in the direction of the pocket 3 and transfers the smoking article 13 into the pocket 3 along the smoking article's longitudinal direction. In particular, the pushing means 20 may engage all rod-shaped articles 13, 14 of the transfer location of hopper vanes, such that all rod-shaped articles of one layer are transferred at the same time into the pocket 3. The same applies regarding the transfer of the rod-shaped articles 14, 15 of the second and third layer into the pockets 4 and 5.

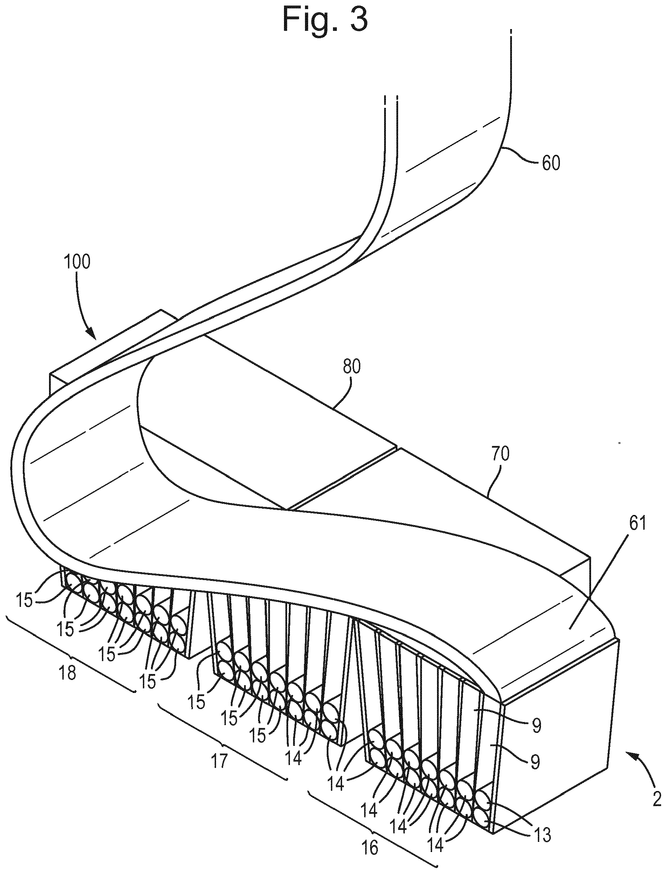

Figure 3 illustrates an embodiment of a device and an arrangement according to the invention. In this figure, identical reference numbers used in Figure 3 denote identical elements to those denoted by the reference number in Figure 1 or Figure 2. This embodiment functions in the same way as the embodiment of Figure 1, but is configured differently to remove one of the feeders from the production line and move it into unoccupied space located laterally of the production line, thereby creating space in the path of the production line. The feeder arrangement 100 comprises a lateral feeder 60, a main feeder 70, and an additional feeder 80. Each of the feeders 60, 70, 80 provides rod-shaped articles to the hopper 2. In this embodiment, two of the three feeders, 70, 80, are arranged in the path of the production line; the lateral feeder 60, on the other hand, is located in unoccupied space located to the side of the path of the production line for feeding rod-shaped articles from the side under gravity, wherein a downstream end portion 61 of the lateral feeder 60 ends vertically above the hopper 2.

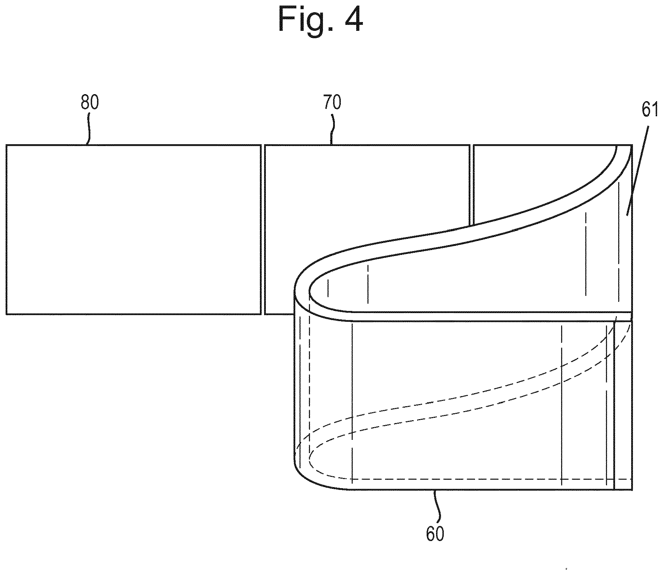

Figure 4 illustrates the feeder arrangement of Figure 3 from above.

Feeding of rod-shaped articles into pockets according to the apparatus and the arrangement of Fig.3 proceeds in a manner which is identical to that shown in Fig.2.

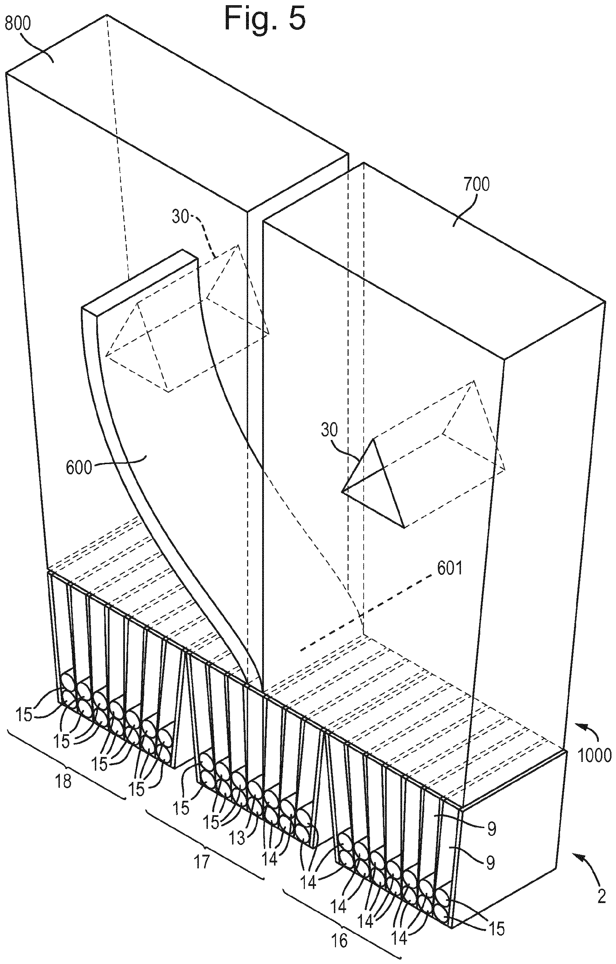

Figure 5 illustrates a perspective view of another embodiment of an apparatus according to the first aspect of the invention and an arrangement according to the second aspect of the invention. In this embodiment, identical reference numbers used in Figure 5 denote identical elements to those denoted by the reference number in Figure 1 or Figure 2 and the embodiment functions in the same way as the embodiment of Figure 1. The feeder arrangement 1000 comprises a lateral feeder 600, which feeds rod-shaped articles from the side under gravity along the full feeding path, a main feeder 700 and an additional feeder 800, both for providing mass flows of rod-shaped articles. Each of the feeders, 600, 700, 800 provides rod-shaped articles to the hopper 2. In this embodiment, two of the three feeders, 700, 800, are arranged in the path of the production line; the lateral feeder 600, on the other hand, is located in unoccupied space located to the side of the path of the production line, wherein a downstream end portion 601 of the lateral feeder 60 ends vertically above the hopper 2. Furthermore, in contrast to the embodiment of Fig.1, the lateral feeder feeds rod-shaped articles 13 in between the rod-shaped articles fed by main feeder 700 and additional feeder 800. This figure also includes mass flow guides 30 which may additionally comprise vibrating means for assisting the mass flow of rod-shaped articles downwards through the feeder.

Under normal circumstances, the lateral feeder feeds rod-shaped articles directly into specifically associated vane(s) of the hopper 2. It is, however, also possible for the lateral feeder 600 to terminate at a position sufficiently above the vanes 9 that the rod-shaped articles are not fed directly into a specific hopper vane(s), but that they mingle with the mass flow of rod-shaped articles from one or both of feeders 700 and 800. In such a case, the rod-shaped articles from lateral feeder 600 can enter two or more hopper vanes at random, introducing some element of randomisation into the collation of rod-shaped articles.

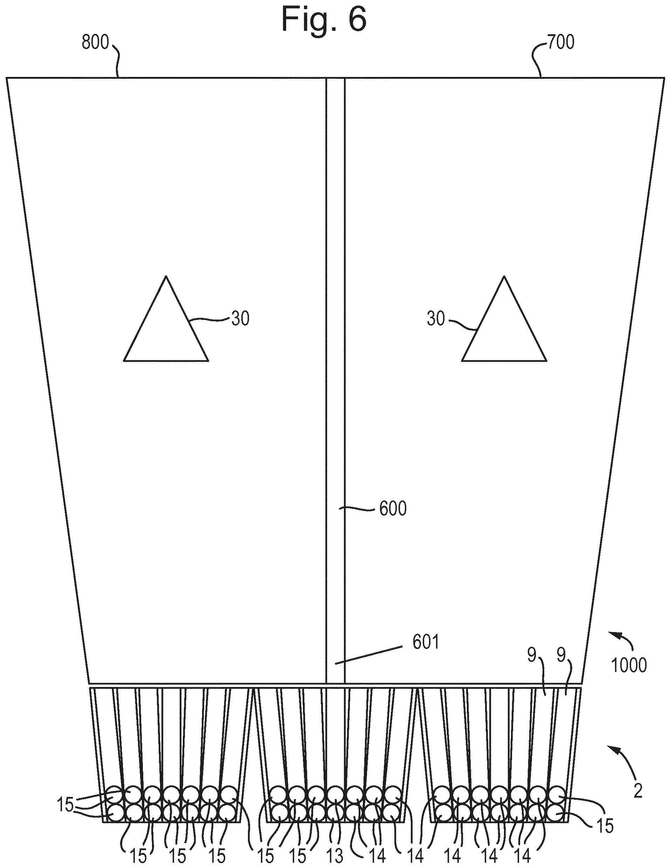

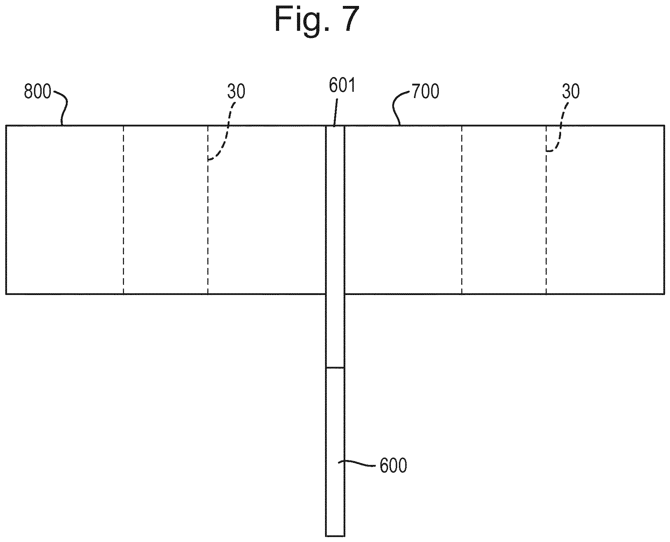

Figure 6 illustrates the arrangement of Fig.5 from the side and Fig. 7 from above, with reference identical numerals indicating the same feature as in preceding figures.

In both embodiments, the embodiment according to Figs, 3 to 4 and the embodiment according to Figs, 5 to 7, the lateral feeder 60, 600 is configured to feed the rod-shaped articles one after the other in a single-file configuration into the hopper 2, In particular, the rod-shaped articles may be fed through the lateral feeder 60, 600 one after the in a side-by-side configuration such that the leading side in the feeding direction of the rod-shaped articles is formed by the longitudinal extension of the rod-shaped articles. Furthermore in both embodiments, the lateral feeder 60, 600 comprises several curved portions operable to feed the rod-shaped articles into the hopper form the side in a desired orientation. In particular, at least one of the respective curved portions is curved in the direction of the longitudinal extension of the rod-shaped articles to be fed through the lateral feeder 60, 600.

Many modifications may be made to the above examples without departing from the scope of the present invention as defined in the accompanying claims.

## Claims

1. An apparatus for arranging rod-shaped articles (13, 14, 15) to be fed into pockets on an endless conveyor operable to travel in a conveyance direction, the apparatus comprising:
a hopper (2) operable to receive rod-shaped articles (13, 14, 15) and to arrange the rod-shaped articles (13, 14, 15) to be fed into the pockets;
a main feeder (70, 700) positioned vertically above the hopper (2) and operable to feed first rod-shaped articles (14) downwards into the hopper (2);
a lateral feeder (60, 600) spaced at least partially from the hopper (2) in a direction orthogonal to the conveyance direction of the endless conveyor,
whereby the lateral feeder (60, 600) is operable to feed second rod-shaped articles (13) along a feeding path through the lateral feeder (60, 600) into the hopper (2) such that the feeding of the second rod-shaped articles (13) is performed under gravity along the full feeding path through the lateral feeder (60, 600) into the hopper (2), wherein a downstream end portion (61, 601) of the lateral feeder (60, 600) ends vertically above the hopper (2).

2. The apparatus of claim 1, wherein the lateral feeder (60, 600) is positioned offset above the hopper (2).

3. The apparatus of claim 1 or claim 2, wherein the lateral feeder (60, 600) is disposed at an angle to the horizontal, which angle is less than or equal to 30 degrees, preferably less than or equal to 15 degrees, more preferably less than or equal to 10 degrees.

4. The apparatus of any one of the preceding claims, wherein the lateral feeder (60, 600) is configured to have at least one curved portion operable to feed the second rod-shaped articles (13) into the hopper (2) in a desired orientation, and wherein the inside radius of the curved portion or each curved portion has a magnitude which is sufficient not to impede gravity feeding of the second rod-shaped articles (13).

5. The apparatus of any one of the preceding claims, additionally comprising transport means operable to transport the second rod-shaped articles (13) in a feeding direction through the lateral feeder (60, 600), said transport means comprising pneumatic conveyancing means, mechanical conveyancing means, or a combination thereof.

6. The apparatus of claim 5, wherein the pneumatic conveyancing means comprises a source of gas, preferably air, operable to move in the feeding direction to pneumatically convey the second rod-shaped articles (13) through the lateral feeder (60, 600) and into the hopper (2).

7. The apparatus of claim 5, wherein the mechanical conveyancing means comprises ultrasonic vibrating means and, optionally, one or more sources of gas, preferably air, at least a component of the source of gas or each source of gas being operable to move in at least one of:
(a) the feeding direction to assist the mechanical conveyancing means by additionally pneumatically conveying the second rod-shaped articles (13) through the lateral feeder (60, 600) and into the hopper (2);
(b) a direction counter to the feeding direction to provide an air cushion to reduce friction between the second rod-shaped articles (13) and the lateral feeder (60, 600) as the second rod-shaped articles (13) move in the feeding direction.

8. The apparatus of any one of the preceding claims, wherein the main feeder (70, 700) is operable to feed the first rod-shaped articles (14) into the hopper (2) under gravity.

9. An arrangement for forming a predetermined collation of rod-shaped articles (13, 14, 15), in particular smoking articles, comprising an apparatus of any one of the preceding claims, rod-shaped articles (13, 14, 15) and pockets; wherein each pocket is adapted to house a predetermined number of rod-shaped articles (13, 14, 15) in a predetermined collation, and wherein in the predetermined collation each rod-shaped article (13, 14, 15) has a predetermined position within the pocket;
wherein the hopper (2) comprises a plurality of hopper vanes (9), and wherein each hopper vane (9) of the plurality of hopper vanes (9) is at least associated with one predetermined position in the pocket;
wherein the main feeder (70, 700) is adapted to provide first rod-shaped articles (14) to a first subset of hopper vanes (9) of the plurality of hopper vanes (9); wherein the lateral feeder (60, 600) is adapted to provide second rod-shaped articles (13) to a second subset of hopper vanes (9) of the plurality of hopper vanes (9); wherein the apparatus comprises an additional feeder (80, 800), and wherein the additional feeder (80, 800) is adapted to provide third rod-shaped articles (15) to a third subset of hopper vanes (9) of the plurality of hopper vanes (9).

10. The arrangement of claim 9, wherein the additional feeder (80, 800) is spaced at least partially from the hopper (2) in a direction orthogonal to the conveyance direction.

11. The arrangement of claim 9 or claim 10, wherein the number of hopper vanes (9) of the plurality of hopper vanes (9) in the hopper (2) corresponds to the number of rod-shaped articles (13, 14, 15) in the predetermined collation such that each hopper vane (9) is associated with a predetermined position for a rod-shaped article (13, 14, 15) in the predetermined collation.

12. The arrangement of any one of claims 9 to 11, wherein separate transfer locations (16, 17, 18) of the hopper vanes (9) provide the different layers of rod-shaped articles (13, 14, 15) in the collation, and wherein the first, second and third subsets of hopper vanes (9) and the transfer locations (16, 17, 18) of the hopper vanes (9) are different, such that different types of rod-shaped articles (13, 14, 15) are comprised in a layer of the different layers of rod-shaped articles (13, 14, 15) in the pocket.

13. The arrangement of claim 12, wherein the pocket is movable between the separate transfer locations (16, 17, 18) on the endless conveyor.

14. The arrangement of claim 13, wherein the pockets on the endless conveyor are adapted to stop consecutively at each of the separate transfer locations(16, 17, 18), the apparatus being adapted to transfer one layer of rod-shaped articles (13, 14, 15) from each separate transfer location (16, 17, 18) into each pocket.

15. A method for arranging rod-shaped articles (13, 14, 15) to be fed into pockets on an endless conveyor travelling in a conveyance direction, the method comprising:
- providing a hopper (2);
- providing a main feeder (70, 700) positioned vertically above the hopper (2), the main feeder (70, 700) comprising first rod-shaped articles (14) and feeding the first rod-shaped articles (14) downwards into the hopper (2);
- providing a lateral feeder (60, 600) spaced from the hopper (2) in a direction orthogonal to the conveyance direction of the endless conveyor, the lateral feeder (60, 600) comprising second rod-shaped articles (13) and feeding the second rod-shaped articles (13) along a feeding path through the lateral feeder (60, 600) into the hopper (2) such that the feeding of the second rod-shaped articles (13) is performed under gravity along the full feeding path through the lateral feeder (60, 600) into the hopper (2), wherein a downstream end portion (61, 601) of the lateral feeder (60, 600) ends vertically above the hopper (2);
- wherein the hopper (2) receives the first and second rod-shaped articles (13, 14) and arranges them to be fed into the pockets.

16. The method of claim 15 wherein the main feeder (70, 700) feeds the first rod-shaped articles (14) under gravity.

## Patentansprüche

1. Vorrichtung zum Anordnen von stabförmigen Artikeln (13, 14, 15), die in Fächer auf einem Endlosförderer zuzuführen sind, der betriebsfähig ist, sich in einer Förderrichtung zu bewegen, wobei die Vorrichtung aufweist:
einen Trichter (2), der betriebsfähig ist, stabförmige Artikel (13, 14, 15) aufzunehmen und die stabförmigen Artikel (13, 14, 15), die in die Fächer zuzuführen sind, anzuordnen;
eine Hauptzuführung (70, 700), die vertikal über dem Trichter (2) positioniert und betriebsfähig ist, erste stabförmige Artikel (14) in den Trichter (2) nach unten zuzuführen;
eine seitliche Zuführung (60, 600), die mindestens teilweise von dem Trichter (2) in einer Richtung beabstandet ist, die zur Förderrichtung des Endlosförderers orthogonal ist, wobei die seitliche Zuführung (60, 600) betriebsfähig ist, zweite stabförmige Artikel (13) entlang einer Zuführbahn durch die seitliche Zuführung (60, 600) in den Trichter (2) zuzuführen, sodass das Zuführen der zweiten stabförmigen Artikel (13) unter Schwerkraft entlang der gesamten Zuführbahn durch die seitliche Zuführung (60, 600) in den Trichter (2) ausgeführt wird, wobei ein stromabwärtiger Endabschnitt (61, 601) der seitlichen Zuführung (60, 600) vertikal über dem Trichter (2) endet.

2. Vorrichtung nach Anspruch 1, wobei die seitliche Zuführung (60, 600) versetzt über dem Trichter (2) positioniert ist.

3. Vorrichtung nach Anspruch 1 oder Anspruch 2, wobei die seitliche Zuführung (60, 600) in einem Winkel zur Horizontalen angeordnet ist und der Winkel kleiner oder gleich 30 Grad, bevorzugt kleiner oder gleich 15 Grad, mehr bevorzugt kleiner oder gleich 10 Grad, beträgt.

4. Vorrichtung nach einem der vorstehenden Ansprüche, wobei die seitliche Zuführung (60, 600) derart ausgelegt ist, dass sie mindestens einen gekrümmten Abschnitt aufweist, der betriebsfähig ist, die zweiten stabförmigen Artikel (13) in einer gewünschten Ausrichtung in den Trichter (2) zuzuführen, und wobei der Innenradius des gekrümmten Abschnitts oder jedes gekrümmten Abschnitts eine Größenordnung aufweist, die ausreichend ist, um eine Schwerkraftzuführung der zweiten stabförmigen Artikel (13) nicht zu behindern.

5. Vorrichtung nach einem der vorstehenden Ansprüche, zusätzlich aufweisend Transportmittel, die betriebsfähig sind, die zweiten stabförmigen Artikel (13) in einer Zuführrichtung durch die seitliche Zuführung (60, 600) zu transportieren, wobei die Transportmittel pneumatische Fördermittel, mechanische Fördermittel oder eine Kombination davon aufweisen.

6. Vorrichtung nach Anspruch 5, wobei die pneumatischen Fördermittel eine Gasquelle, bevorzugt eine Luftquelle, aufweisen, die betriebsfähig ist, sich in der Zuführrichtung zu bewegen, um die zweiten stabförmigen Artikel (13) pneumatisch durch die seitliche Zuführung (60, 600) und in den Trichter (2) zu transportieren.

7. Vorrichtung nach Anspruch 5, wobei die mechanischen Fördermittel Ultraschallschwingungsmittel und, optional, eine oder mehrere Gasquellen, bevorzugt Luftquellen, aufweisen, und mindestens eine Komponente der Gasquelle oder jeder Gasquelle betriebsfähig ist, sich in mindestens einer zu bewegen von:
(a) der Zuführrichtung, um die mechanischen Fördermittel durch zusätzliches pneumatisches Fördern der zweiten stabförmigen Artikel (13) durch die seitliche Zuführung (60, 600) und in den Trichter (2) zu unterstützen;
(b) einer Richtungsströmung zur Zuführrichtung, um ein Luftkissen bereitzustellen und Reibung zwischen den zweiten stabförmigen Artikeln (13) und der seitlichen Zuführung (60, 600) zu reduzieren, während sich die zweiten stabförmigen Artikel (13) in der Zuführrichtung bewegen.

8. Vorrichtung nach einem der vorstehenden Ansprüche, wobei die Hauptzuführung (70, 700) betriebsfähig ist, die ersten stabförmigen Artikel (14) unter Schwerkraft in den Trichter (2) zuzuführen.

9. Anordnung zum Bilden einer vorbestimmten Sortierung von stabförmigen Artikeln (13, 14, 15), insbesondere Raucherartikeln, die eine Vorrichtung nach einem der vorstehenden Ansprüche, stabförmige Artikel (13, 14, 15) und Fächer aufweist;
wobei jedes Fach angepasst ist, eine vorbestimmte Anzahl an stabförmigen Artikeln (13, 14, 15) in einer vorbestimmten Sortierung aufzunehmen und wobei in der vorbestimmten Sortierung jeder stabförmige Artikel (13, 14, 15) eine vorbestimmte Position innerhalb des Fachs aufweist;
wobei der Trichter (2) mehrere Trichterzellen (9) aufweist und wobei jede Trichterzelle (9) der mehreren Trichterzellen (9) mindestens einer vorbestimmten Position in dem Fach zugeordnet ist;
wobei die Hauptzuführung (70, 700) angepasst ist, die ersten stabförmigen Artikel (14) an eine erste Untergruppe von Trichterzellen (9) der mehreren Trichterzellen (9) bereitzustellen;
wobei die seitliche Zuführung (60, 600) angepasst ist, zweite stabförmige Artikel (13) an eine zweite Untergruppe von Trichterzellen (9) der mehreren Trichterzellen (9) bereitzustellen; wobei die Vorrichtung eine zusätzliche Zuführung (80, 800) aufweist, und wobei die zusätzliche Zuführung (80, 800) angepasst ist, dritte stabförmige Artikel (15) an eine dritte Untergruppe von Trichterzellen (9) der mehreren Trichterzellen (9) bereitzustellen.

10. Anordnung nach Anspruch 9, wobei die zusätzliche Zuführung (80, 800) mindestens teilweise von dem Trichter (2) in einer zur Förderrichtung orthogonalen Richtung beabstandet ist.

11. Anordnung nach Anspruch 9 oder Anspruch 10, wobei die Anzahl an Trichterzellen (9) der mehreren Trichterzellen (9) in dem Trichter (2) der Anzahl an stabförmigen Artikeln (13, 14, 15) in der vorbestimmten Sortierung entspricht, sodass jede Trichterzelle (9) einer vorbestimmten Position für einen stabförmigen Artikel (13, 14, 15) in der vorbestimmten Sortierung zugeordnet ist.

12. Anordnung nach einem der Ansprüche 9 bis 11, wobei getrennte Übergabestellen (16, 17, 18) der Trichterzellen (9) die verschiedenen Schichten von stabförmigen Artikeln (13, 14, 15) in der Sortierung bereitstellen, und wobei die ersten, zweiten und dritten Untergruppen von Trichterzellen (9) und die Übergabestellen (16, 17, 18) der Trichterzellen (9) verschieden sind, sodass verschiedene Arten von stabförmigen Artikeln (13, 14, 15) in einer Schicht der verschiedenen Schichten von stabförmigen Artikeln (13, 14, 15) in dem Fach beinhaltet sind.

13. Anordnung nach Anspruch 12, wobei das Fach zwischen den separaten Übergabestellen (16, 17, 18) auf dem Endlosförderer beweglich ist.

14. Anordnung nach Anspruch 13, wobei die Fächer auf dem Endlosförderer angepasst sind, nacheinander an jeder der getrennten Übergabestellen (16, 17, 18) zu stoppen, und die Vorrichtung angepasst ist, eine Schicht von stabförmigen Artikeln (13, 14, 15) von jeder getrennten Übergabestelle (16, 17, 18) in jedes Fach zu übertragen.

15. Verfahren zum Anordnen von stabförmigen Artikeln (13, 14, 15), die in Fächer auf einem Endlosförderer zuzuführen sind, die sich in einer Förderrichtung bewegen, wobei das Verfahren aufweist:
- Bereitstellen eines Trichters (2);
- Bereitstellen einer Hauptzuführung (70, 700), die vertikal über dem Trichter (2) positioniert ist, wobei die Hauptzuführung (70, 700) erste stabförmige Artikel (14) aufweist und die ersten stabförmigen Artikel (14) nach unten in den Trichter (2) zuführt;
- Bereitstellen einer seitlichen Zuführung (60, 600), die von dem Trichter (2) in einer Richtung beabstandet ist, die zur Förderrichtung des Endlosförderers orthogonal ist, wobei die seitliche Zuführung (60, 600) zweite stabförmige Artikel (13) aufweist und die zweiten stabförmigen Artikel (13) entlang einer Zuführbahn durch die seitliche Zuführung (60, 600) in den Trichter (2) zuführt, sodass das Zuführen der zweiten stabförmigen Artikel (13) unter Schwerkraft entlang der gesamten Zuführbahn durch die seitliche Zuführung (60, 600) in den Trichter (2) ausgeführt wird, wobei ein stromabwärtiger Endabschnitt (61, 601) der seitlichen Zuführung (60, 600) vertikal über dem Trichter (2) endet;
- wobei der Trichter (2) die ersten und zweiten stabförmigen Artikel (13, 14) aufnimmt und sie zum Zuführen in die Fächer anordnet.

16. Verfahren nach Anspruch 15, wobei die Hauptzuführung (70, 700) die ersten stabförmigen Artikel (14) unter Schwerkraft zuführt.

## Revendications

1. Appareil pour l'agencement d'articles en forme de tige (13, 14, 15) devant être introduits dans des poches sur un convoyeur sans fin pouvant fonctionner pour voyager dans une direction de transport, l'appareil comprenant :
une trémie (2) pouvant fonctionner pour recevoir des articles en forme de tige (13, 14, 15) et pour agencer les articles en forme de tige (13, 14, 15) devant être introduits dans les poches;
un dispositif d'alimentation principal (70, 700) positionné verticalement au-dessus de la trémie (2) et pouvant fonctionner pour faire passer les premiers articles en forme de tige (14) vers le bas dans la trémie (2);
un dispositif d'alimentation latéral (60, 600) espacé au moins partiellement de la trémie (2) dans une direction orthogonale vers la direction de transport du convoyeur sans fin, de sorte que le dispositif d'alimentation latéral (60, 600) puisse fonctionner pour introduire les deuxièmes articles en forme de tige (13) le long d'un trajet d'alimentation à travers le dispositif d'alimentation latéral (60, 600) dans la trémie (2), de sorte que l'alimentation des deuxièmes articles en forme de tige (13) est réalisée par gravité le long du trajet d'alimentation complet à travers le dispositif d'alimentation latéral (60, 600) dans la trémie (2), où une partie d'extrémité aval (61, 601) du dispositif d'alimentation latéral (60, 600) termine verticalement au-dessus de la trémie (2).

2. Appareil selon la revendication 1, dans lequel le dispositif d'alimentation latéral (60, 600) est positionné décalé au-dessus de la trémie (2).

3. Appareil selon la revendication 1 ou la revendication 2, dans lequel le dispositif d'alimentation latéral (60, 600) est disposé à un angle par rapport à l'horizontale, lequel angle est inférieur ou égal à 30 degrés, de préférence inférieur ou égal à 15 degrés, plus de préférence inférieur ou égal à 10 degrés.

4. Appareil selon l'une quelconque des revendications précédentes, dans lequel le dispositif d'alimentation latéral (60, 600) est configuré pour avoir au moins une partie courbée pouvant fonctionner pour faire passer les deuxièmes articles en forme de tige (13) dans la trémie (2) dans une orientation souhaitée, et dans lequel le rayon intérieur de la partie incurvée ou de chaque partie incurvée a une magnitude suffisante pour ne pas gêner l'alimentation par gravité des deuxièmes articles en forme de tige (13).

5. Appareil selon l'une quelconque des revendications précédentes, comprenant en outre un moyen de transport pouvant fonctionner pour transporter les deuxièmes articles en forme de tige (13) dans une direction d'alimentation à travers le dispositif d'alimentation latéral (60, 600), ledit moyen de transport comprenant des moyens de transport pneumatiques, des moyens de transport mécaniques, ou une combinaison de ceux-ci.

6. Appareil selon la revendication 5, dans lequel les moyens de transport pneumatique comprennent une source de gaz, de préférence d'air, pouvant fonctionner pour se déplacer dans la direction d'alimentation pour transporter pneumatiquement les deuxièmes articles en forme de tige (13) à travers le dispositif d'alimentation latéral (60, 600) et dans la trémie (2).

7. Appareil selon la revendication 5, dans lequel les moyens de transport mécaniques comprennent des moyens de vibration ultrasoniques et, facultativement, une ou plusieurs sources de gaz, de préférence d'air, au moins un composant de la source de gaz ou de chaque source de gaz pouvant fonctionner pour se déplacer dans au moins l'un des suivantes :
(a) la direction d'alimentation pour aider les moyens de transport mécanique, en transportant en outre les deuxièmes articles en forme de tige (13) à travers le dispositif d'alimentation latéral (60, 600) et dans la trémie (2);
(b) une direction opposée à la direction d'alimentation pour fournir un coussin d'air afin de réduire la friction entre les deuxièmes articles en forme de tige (13) et le dispositif d'alimentation latéral (60, 600) étant donné que les deuxièmes articles en forme de tige (13) se déplacent dans la direction d'alimentation.

8. Appareil selon l'une quelconque des revendications précédentes, dans lequel le dispositif d'alimentation principale (70, 700) peut fonctionner pour faire passer les premiers articles en forme de tige (14) dans la trémie (2) par gravité.

9. Un agencement pour la formation d'une collation prédéterminée d'articles en forme de tige (13, 14, 15), en particulier des articles à fumer, comprenant un appareil selon l'une quelconque des revendications précédentes, des articles en forme de tige (13, 14, 15) et des poches;
dans lequel chaque poche est adaptée pour loger un nombre prédéterminé d'articles en forme de tige (13, 14, 15) dans une collation prédéterminée, et dans lequel, dans la collation prédéterminée chaque article en forme de tige (13, 14, 15) a une position prédéterminée dans la poche;
dans lequel la trémie (2) comprend une pluralité d'aubes de trémie (9), et dans lequel chaque aube de trémie (9) de la pluralité d'aubes de trémie (9) est associée au moins à une position prédéterminée dans la poche;
dans lequel le dispositif d'alimentation principal (70, 700) est adapté pour fournir des premiers articles en forme de tige (14) à un premier sous-ensemble d'aubes de trémie (9) de la pluralité d'aubes de trémie (9);
dans lequel le dispositif d'alimentation latéral (60, 600) est adapté pour fournir des deuxièmes articles en forme de tige (13) à un deuxième sous-ensemble d'aubes de trémie (9) de la pluralité d'aubes de trémie (9); dans lequel l'appareil comprend un dispositif d'alimentation supplémentaire (80, 800), et dans lequel le dispositif d'alimentation supplémentaire (80, 800) est adapté pour fournir des troisièmes articles en forme de tige (15) à un troisième sous-ensemble d'aubes de trémie (9) de la pluralité d'aubes de trémie (9).

10. Agencement selon la revendication 9, dans lequel le dispositif d'alimentation supplémentaire (80, 800) est espacé au moins partiellement de la trémie (2) dans une direction orthogonale vers la direction de transport.

11. Agencement selon la revendication 9 ou la revendication 10, dans lequel le nombre d'aubes de trémie (9) de la pluralité d'aubes de trémie (9) dans la trémie (2) correspond au nombre d'articles en forme de tige (13, 14, 15) dans la collation prédéterminée de sorte que chaque aube de trémie (9) est associée à une position prédéterminée pour un article en forme de tige (13, 14, 15) dans la collation prédéterminée.

12. Agencement selon l'une quelconque des revendications 9 à 11, dans lequel des emplacements de transfert séparés (16, 17, 18) des aubes de trémie (9) fournissent les différentes couches d'articles en forme de tige (13, 14, 15) dans la collation, et dans lequel les premier, deuxième et troisième sous-ensembles d'aubes de trémie (9) et les emplacements de transfert (16, 17, 18) des aubes de trémie (9) sont différents, de sorte que différents types d'articles en forme de tige (13, 14, 15) sont compris dans une couche des différentes couches d'articles en forme de tige (13, 14, 15) dans la poche.

13. Agencement selon la revendication 12, dans lequel la poche est mobile entre les emplacements de transfert séparés (16, 17, 18) sur le convoyeur sans fin.

14. Agencement selon la revendication 13, dans lequel les poches sur le transporteur sans fin sont adaptées pour s'arrêter consécutivement à chacun des emplacements de transfert séparés (16, 17, 18), l'appareil étant adapté pour transférer une couche d'articles en forme de tige (13, 14, 15) de chaque emplacement de transfert séparé (16, 17, 18) dans chaque poche.

15. Procédé pour l'agencement d'articles en forme de tige (13, 14, 15) devant être introduits dans des poches sur un convoyeur sans fin se déplaçant dans une direction de transport, le procédé comprenant :
- la fourniture d'une trémie (2);
- la fourniture d'un dispositif d'alimentation principal (70, 700) positionné verticalement au-dessus de la trémie (2), le dispositif d'alimentation principal (70, 700) comprenant les premiers articles en forme de tige (14) et l'alimentation des premiers articles en forme de tige (14) vers le bas dans la trémie (2);
- la fourniture d'un dispositif d'alimentation latéral (60, 600) espacé de la trémie (2) dans une direction orthogonale vers la direction de transport du convoyeur sans fin, le dispositif d'alimentation latéral (60, 600) comprenant des deuxièmes articles en forme de tige (13) et l'alimentation des deuxièmes articles en forme de tige (13) le long d'un trajet d'alimentation à travers le dispositif d'alimentation latéral (60, 600) dans la trémie (2), de sorte que l'alimentation des deuxièmes articles en forme de tige (13) est effectuée par gravité le long du trajet d'alimentation complet à travers le dispositif d'alimentation latérale (60, 600) dans la trémie (2), dans lequel une partie d'extrémité aval (61, 601) du dispositif d'alimentation latérale (60, 600) se termine verticalement au-dessus de la trémie (2);
- dans lequel la trémie (2) reçoit les premier et deuxième articles en forme de tige (13, 14) et les organise pour qu'ils soient introduits dans les poches.

16. Procédé selon la revendication 15, dans lequel le dispositif d'alimentation principale (70, 700) fait passer les premiers articles en forme de tige (14) par gravité.
